# EUROPEAN PATENT SPECIFICATION

(11) **EP 4 357 301 B1**
(45) Date of publication and mention of the grant of the patent: **22.04.2026**
(21) Application number: 22867671.4
(22) Date of filing: 06.09.2022
(51) Int. Cl.: C01B 32/205, H01M 4/133, H01M 4/587, H01M 10/0525, H01M 10/052, H01M 4/62, H01M 4/36, H01M 4/02

(54) **METHOD FOR PREPARING NEGATIVE ELECTRODE ACTIVE MATERIAL, NEGATIVE ELECTRODE, AND SECONDARY BATTERY**
VERFAHREN ZUR HERSTELLUNG EINES NEGATIVELEKTRODENAKTIVMATERIALS, NEGATIVELEKTRODE UND SEKUNDÄRBATTERIE
PROCÉDÉ DE PRÉPARATION DE MATIÈRE ACTIVE D'ÉLECTRODE NÉGATIVE, ÉLECTRODE NÉGATIVE, ET BATTERIE SECONDAIRE

(30) Priority: 10.09.2021 KR 20210121303
(43) Date of publication of application: 24.04.2024
(73) Proprietor: LG Energy Solution, Ltd., Seoul 07335 (KR)
(72) Inventor: LEE, Chang Ju, Daejeon 34122 (KR); CHOI, Seung Youn, Daejeon 34122 (KR); LIM, Ga Hyun, Daejeon 34122 (KR); WOO, Sang Wook, Daejeon 34122 (KR)
(74) Representative: Hoffmann Eitle
(86) International application number: PCT/KR2022/013367
(87) International publication number: WO 2023/038402

(56) References cited:
- EP-B1- 2 432 052
- CN-A- 111 232 969
- CN-A- 111 620 331
- CN-B- 108 706 973
- JP-B2- 6 135 680
- KR-A- 20190 019 430
- KR-A- 20200 076 504
- KR-A- 20200 136 335
- KR-B1- 101 173 673

## Description

### TECHNICAL FIELD

This application claims the benefit of Korean Patent Application No. 10-2021-0121303, filed on September 10, 2021, in the Korean Intellectual Property Office.

### Technical Field

The present invention relates to a method for preparing a negative electrode active material, and a negative electrode and a secondary battery.

### BACKGROUND ART

Rising prices of energy sources due to fossil fuel depletion and ever-growing awareness of environmental pollution have driven eco-friendly alternative energy sources to be placed as a first priority for life in the future.

In particular, the demand for secondary batteries as an eco-friendly alternative energy source is sharply increasing as mobile device technology continues to develop and the demand for the mobile devices continues to increase.

On top of that, in recent years, growing concern over environmental issues has given rise to extensive research into electric vehicles (EV) and hybrid electric vehicles (HEV), which may replace vehicles powered by fossil fuels, such as gasoline vehicle and diesel vehicle, one of the main culprits for air pollution. Lithium secondary batteries having high energy density, high discharge voltage, and high output stability have been predominantly studied and applied as power sources for these electric vehicles (EV) and hybrid electric vehicles (HEV).

In the secondary batteries, lithium metal has been typically used as a negative electrode, but due to a battery short circuit caused by formation of dendrites and risk of explosion resulting therefrom, carbon-based active materials, which serve to reversibly intercalate and deintercalate lithium ions and maintain structural and electrical properties have emerged as a replacement.

Various types of carbon-based active materials, such as artificial graphite, natural graphite, and hard carbon, have been used as the carbon-based active materials, and, among these materials, a graphite-based active material, which may ensure life characteristics of lithium secondary batteries due to excellent reversibility, has been most widely used. Since the graphite-based active material has a low discharge voltage versus lithium of -0.2 V, a battery using the graphite-based active material may exhibit a high discharge voltage of 3.6 V, and thus, the graphite-based active material provides a number of benefits in regard to energy density of lithium batteries.

In particular, the artificial graphite provides benefits such as excellent prevention of swelling and excellent high temperature characteristics compared to the natural graphite. However, the artificial graphite has fewer pores than the natural graphite and thus have low output characteristics, and in response, to improve output characteristics and form pores in particles, it is known that artificial graphite in the form of secondary particles in which primary particles are aggregated or bonded is used.

However, artificial graphite assembled in the form of secondary particles is highly likely to have an irregular and uneven shape depending on the shape and assembling of primary particles. Such artificial graphite has, when used for a negative electrode, poor electrode adhesion causing degradation of processability, and deintercalation of an active material upon driving the negative electrode, resulting in deterioration of long-term cycle characteristics.

Japanese Patent No. 4403327 discloses graphite powder for a negative electrode of a lithium ion secondary battery, but does not provide an alternative to the above-described tasks.

CN 108706973 B describes a preparation method of a graphite material using crushed raw needle coke and calcined needle coke as aggregates and asphalt as a binder.
CN 111232969 A relates to a composite mesophase negative electrode material, a lithium ion secondary battery, a preparation method and applications thereof.
CN 111620331 A concerns an artificial graphite negative electrode material, a preparation method thereof and application of the artificial graphite negative electrode material in a lithium ion battery.
EP 2 432 052 A1 describes a method in which green coke from coal and/or petroleum and calcined coke from coal and/or petroleum are blended using a weight ratio between 90:10 and 10:90, and then fired to produce an anode active material for lithium secondary batteries.

### [Related Art Document]

### [Patent Document]

Japanese Patent No. 4403327
CN 108706973 B
CN 111232969 A
CN 111620331 A
EP 2 432 052 A1

### DISCLOSURE OF THE INVENTION

### TECHNICAL PROBLEM

An aspect of the present invention provides, in a method for preparing a negative electrode active material including artificial graphite in the form of secondary particles, a method for preparing a negative electrode active material having both excellent adhesion and improved quick charging performance.

In addition, another aspect of the present invention provides a negative electrode including a negative electrode active material prepared from the method for preparing a negative electrode active material described above.

In addition, another aspect of the present invention provides a secondary battery including the negative electrode described above.

### TECHNICAL SOLUTION

According to an aspect of the present invention, there is provided a method for preparing a negative electrode active material, which includes mixing green coke particles, calcined coke particles, and a binder, and graphitizing the mixture through heat treatment to form an artificial graphite particle in the form of an secondary particle in which primary artificial graphite particles are bonded to each other, wherein an average particle diameter (D₅₀) of the green coke particles is greater than an average particle diameter (D₅₀) of the calcined coke particles, wherein the green coke particles have an average particle diameter (D₅₀) of 9 µm to 15 µm, the calcined coke particles have an average particle diameter (D₅₀) of 3 µm to 8 µm, wherein the average particle diameter (D₅₀) is determined by using a laser diffraction method; and wherein the green coke particles and the calcined coke particles are mixed in a weight ratio of 10:90 to 90:10.

In addition, according to another aspect of the present invention, there is provided a negative electrode including a negative electrode current collector and a negative electrode active material layer disposed on at least one surface of the negative electrode current collector, wherein the negative electrode active material layer includes a negative electrode active material prepared from the method for preparing a negative electrode active material described above.

In addition, according to another aspect of the present invention, there is provided a secondary battery including the negative electrode described above; a positive electrode facing the negative electrode; a separator disposed between the negative electrode and the positive electrode; and an electrolyte.

### ADVANTAGEOUS EFFECTS

A method for preparing a negative electrode active material of the present invention, in preparing a negative electrode active material including artificial graphite in the form of secondary particles, is characterized by using green coke particles and calcined coke particles as raw materials for primary particles, an average particle diameter (D₅₀) of the green coke particles being greater than an average particle diameter (D₅₀) of the calcined coke particles. A negative electrode including a negative electrode active material prepared through the method for preparing a negative electrode active material of the present invention may have both improved adhesion and quick charging performance.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

The term "average particle diameter (D₅₀)" as used herein may be defined as a particle diameter at a cumulative volume of 50% in a particle size distribution curve of particles. The average particle diameter (D₅₀) is measured by using a laser diffraction method. The laser diffraction method may generally measure a particle diameter ranging from a submicron level to a few mm and may obtain highly repeatable and high-resolution results.

Hereinafter, the present invention will be described in detail.

### Method for preparing negative electrode active materials

The present invention relates to a method for preparing a negative electrode active material, and particularly, to a method for preparing a negative electrode active material for a lithium secondary battery.

Specifically, the method for preparing a negative electrode active material is characterized by including mixing green coke particles, calcined coke particles, and a binder, and graphitizing the mixture through heat treatment to form an artificial graphite particle in the form of a secondary particle in which primary artificial graphite particles are bonded to each other, an average particle diameter (D₅₀) of the green coke particles being greater than an average particle diameter (D₅₀) of the calcined coke particles.

In the related art, artificial graphite in the form of secondary particles is highly likely to have an irregular and uneven shape depending on the shape and assembling of primary particles. Such artificial graphite has, when used for a negative electrode, poor electrode adhesion causing degradation of processability, and deintercalation of an active material upon driving the negative electrode, resulting in deterioration of long-term cycle characteristics. In addition, with larger primary particles, artificial graphite in the form of secondary particles has improved adhesion but tends to have lower quick charging performance. Conversely, with smaller primary particles, artificial graphite in the form of secondary particles has improved quick charging performance but tends to have lower adhesion.

To overcome such limitations, the present invention is characterized by including mixing green coke particles, calcined coke particles, and a binder, and graphitizing the mixture through heat treatment to form an artificial graphite particle in the form of a secondary particle in which primary artificial graphite particles are bonded to each other, an average particle diameter (D₅₀) of the the green coke particles being greater than an average particle diameter (D₅₀) of the calcined coke particles. The green coke particles have a round and gentle feature, and have a greater average particle diameter (D₅₀) than the calcined coke particles, thereby contributing to improving overall adhesion of a negative electrode active material. Meanwhile, the calcined coke particles have a smaller average particle diameter (D₅₀) than the green coke particles, contributing to improving quick charging performance, and exhibiting excellent capacity retention performance. This allows the negative electrode active material prepared through the method for preparing a negative electrode active material of the present invention to have both improved quick charging performance and adhesion.

The method for preparing a negative electrode active material of the present invention includes mixing green coke particles, calcined coke particles, and a binder. In this case, an average particle diameter (D₅₀) of the green coke particles is greater than the average particle diameter (D₅₀) of the calcined coke particles.

The green coke particles and the calcined coke particles may each form artificial graphite particles in the form of primary particles through a graphitization process. In addition, the primary artificial graphite particles derived from the green coke particles and the calcined coke particles may be bonded to each other to form artificial graphite particles in the form of secondary particles.

The green coke particles may be obtained by performing a coking reaction on coal or petroleum residues, or pitch, which is a processed product, at high pressure and high temperature. In this case, the green coke particles are coke particles obtained immediately after a coking process, and are not subjected to heat treatment such as calcination or carbonization, and may thus contain volatile matter (e.g., sulfur).

The green coke particles may have a smoother and gentler surface than calcined coke particles, which will be described later. Accordingly, when formed into secondary particles, the green coke particles may contribute to smoothing an entire surface of the particles and improving uniformity of the shape, thereby contributing to improving adhesion of a negative electrode active material. In particular, in the present invention, the green coke particles have a larger average particle diameter than the calcined coke particles, and a negative electrode active material prepared therefrom may thus have further improved adhesion.

The green coke particles have an average particle diameter (D₅₀) of 9 µm to 15 µm, specifically 10 µm to 13 µm. When the average particle diameter of the green coke particles is in the above range, deterioration of quick charging performance due to excessively large green coke particles may be prevented and also an improvement in adhesion of a negative electrode active material may be maximized.

The green coke particles may have a true density of 1.20 g/cc to 1.60 g/cc, specifically 1.3 g/cc to 1.5 g/cc. As used herein, the true density may refer to a density of particles alone excluding a gap between the particles to be measured. The true density may be measured using a gas pycnometer.

In addition, the green coke particles may contain sulfur (S) in an amount of 1,000 ppm to 5,000 ppm, specifically 1,500 ppm to 3,000 ppm. The amount of sulfur may be measured through an inductively coupled plasma (ICP) analysis method.

The calcined coke particles may refer to coke that is calcined after performing a coking reaction on coal or petroleum residues, or pitch, which is a processed product, at high pressure and high temperature. The calcined coke particles may not contain volatile matter or contain a trace amount of volatile matter as a calcination process is performed.

The calcined coke particles are generally flatter and sharper in shape than the green coke particles, but have excellent capacity retention properties. In addition, in the present invention, as the average particle diameter (D₅₀) of the calcined coke particles is regulated to be smaller than the average particle diameter (D₅₀) of the green coke particles, a negative electrode active material having excellent capacity retention and quick charging properties without deterioration in adhesion may be obtainable.

The calcined coke particles have an average particle diameter (D₅₀) of 3 µm to 8 µm, specifically 6 µm to 8 µm. When the average particle diameter of the calcined coke particles is in the above range, deterioration of adhesion due to excessively large calcined coke particles may be prevented and also an improvement in quick charging performance of a negative electrode active material may be achieved.

The calcined coke particles may have a true density of 1.80 g/cc to 2.25 g/cc, specifically 1.9 g/cc to 2.2 g/cc.

In addition, the calcined coke particles may contain sulfur (S) in an amount of 50 ppm to 1,000 ppm, specifically 80 ppm to 200 ppm.

In the present invention, an average particle diameter (D₅₀) of the green coke particles is greater than an average particle diameter (D₅₀) of the calcined coke particles. The green coke particles have a smooth and gentle surface, and have a greater average particle diameter (D₅₀) than the calcined coke particles, thereby contributing to improving overall adhesion of a negative electrode active material. Meanwhile, the calcined coke particles have a smaller average particle diameter (D₅₀) than the green coke particles, contributing to improving quick charging performance, and exhibiting excellent capacity retention performance. This allows the negative electrode active material prepared through the method for preparing a negative electrode active material of the present invention to have both improved quick charging performance and adhesion.

When the average particle diameter (D₅₀) of the green coke particles is equal to the average particle diameter (D₅₀) of the calcined coke particles, or is smaller than the average particle diameter (D₅₀) of the calcined coke particles, an effect of improving adhesion due to the green coke particles may not be improved, and quick charging performance may not be improved as the calcined coke particles have a greater particle size than the green coke particles.

Specifically, a ratio of the average particle diameter (D₅₀) of the calcined coke particles to the average particle diameter (D₅₀) of the green coke particles may be 0.3 or greater and less than 1, specifically 0.5 to 0.8, and when the ratio is in the above range, the improvement in both quick charging performance and adhesion described above may be maximized.

The green coke particles and the calcined coke particles are mixed in a weight ratio of 10:90 to 90:10, specifically, in a weight ratio of 25:75 to 75:25. When the weight ratio is in the above range, it is desirable in that the improvement of adhesion of a negative electrode active material by the green coke particles may be maximized, and quick charging performance may be improved.

The green coke particles and the calcined coke particles may each be mixed as two or more particles.

The binder may serve to bond or tie the green coke particles and the calcined coke particles together. The green coke particles and the calcined coke particles are bonded via the binder, and heat treated and graphitized, and thus the green coke particles and the calcined coke particles may be prepared as primary artificial graphite particles, and also artificial graphite particles in the form of secondary particles in which the primary artificial graphite particles are bonded to each other may be prepared.

The binder may include at least one selected from a polymer resin and pitch. To be specific, the polymer resin may include at least one selected from the group consisting of sucrose, a phenol resin, a naphthalene resin, a polyvinyl alcohol resin, a furfuryl alcohol resin, a polyacrylonitrile resin, a polyamide resin, a furan resin, a cellulose resin, a styrene resin, a polyimide resin, an epoxy resin, a vinyl chloride resin, and polyvinyl chloride. The pitch may include at least one selected from the group consisting of a coal-based pitch, a petroleum-based pitch, and a mesophase pitch.

The binder may be mixed in an amount of 1 wt% to 10 wt%, specifically 4 wt% to 8 wt%, with respect to a total weight of the green coke particles, the calcined coke particles, and the binder. The green coke particles include volatile matter therein and have low true density, and accordingly, a binder may not be required when artificial graphite in the form of secondary particles is prepared using the green coke particles alone, but the calcined coke particles are one in which volatile matter is removed from the inside thereof and have high true density, and accordingly, a binder may be essential when artificial graphite in the form of secondary particles is prepared using the calcined coke particles alone. In the present invention, when the binder is added to the mixture of the green coke particles and the calcined coke particles in an amount within the above range, each of the coke particles is densely assembled to further improve quick charging performance and adhesion.

The present invention includes graphitizing the mixture through heat treatment to form an artificial graphite particle in the form of a secondary particle in which primary artificial graphite particles are bonded to each other.

The artificial graphite particle in the form of a secondary particle may be graphitized by heat treating a mixture of the green coke particles, the calcined coke particles, and the binder. Specifically, a mixture of the green coke particles, the calcined coke particles, and the binder may be put into a reactor, and the reactor may be operated to bond the mixture through centrifugal force and form the secondary particle in which primary particles are bonded to each other, and the secondary particle may be graphitized through heat treatment.

The heat treatment may be performed at 2,500 °C to 3,500 °C, preferably 2,700 °C to 3,200 °C, and in the temperature range, the green coke particles and the calcined coke particles may well be graphitized.

The heat treatment may be performed for 40 hours to 60 hours, and within the above range, the green coke particles and the calcined coke particles may be sufficiently graphitized through the heat treatment in the temperature range described above.

The present invention may further include forming an amorphous carbon coating layer on the artificial graphite particles in the form of secondary particles.

The amorphous carbon coating layer may contribute to improving structural stability of the artificial graphite particles in the form of secondary particles and preventing a side reaction between a negative electrode active material and an electrolyte.

The amorphous carbon coating layer may be formed in an amount of 0.1 wt% to 10 wt%, preferably, 1 wt% to 5 wt%, with respect to a total amount of the negative electrode active material. The presence of the amorphous carbon coating layer may improve the structural stability of the negative electrode active material, but since there is a concern that excessive formation of the amorphous carbon coating layer causes degradation of high temperature storage performance and reduction in initial efficiency due to an increase in specific surface area upon roll pressing of a negative electrode, it is desirable to form a carbon coating layer within the above-described amount range.

The amorphous carbon coating layer may be formed by providing a carbon coating layer precursor to the artificial graphite particles in the form of secondary particles, followed by heat treatment.

The carbon coating layer precursor may include at least one selected from a polymer resin and pitch. To be specific, the polymer resin may include at least one selected from the group consisting of sucrose, a phenol resin, a naphthalene resin, a polyvinyl alcohol resin, a furfuryl alcohol resin, a polyacrylonitrile resin, a polyamide resin, a furan resin, a cellulose resin, a styrene resin, a polyimide resin, an epoxy resin, a vinyl chloride resin, and polyvinyl chloride. The pitch may include at least one selected from the group consisting of a coal-based pitch, a petroleum-based pitch, and a mesophase pitch.

A heat treatment process for forming the amorphous carbon coating layer may be performed at 1,000 °C to 1,500 °C in terms of promoting uniform formation of the amorphous carbon coating layer.

According to the present invention, a negative electrode active material including artificial graphite particles in the form of secondary particles in which primary artificial graphite particles are bonded to each other may be formed. In this case, the primary artificial graphite particles are derived by graphitizing the green coke particles and the calcined coke particles. The artificial graphite in the form of secondary particles may be formed by bonding and assembling the primary artificial graphite particles.

### Negative electrode

In addition, the present invention provides a negative electrode including a negative electrode active material prepared from the method for preparing a negative electrode active material described above, more particularly, a negative electrode for a lithium secondary battery.

The negative electrode includes a negative electrode current collector, and a negative electrode active material layer disposed on the negative electrode current collector. The negative electrode active material layer includes the negative electrode active material prepared from the method for preparing a negative electrode active material described above.

A negative electrode current collector generally used in the art may be used without limitation as the negative electrode current collector, and, for example, the negative electrode current collector is not particularly limited so long as it has high conductivity without causing chemical changes in lithium secondary batteries. For example, the negative electrode current collector may include at least one selected from copper, stainless steel, aluminum, nickel, titanium, fired carbon, and an aluminum-cadmium alloy, preferably, copper.

The negative electrode current collector may have fine irregularities on a surface thereof to improve bonding strength of a negative electrode active material, and the negative electrode current collector may be used in various forms such as a film, a sheet, a foil, a net, a porous body, a foam body, and a non-woven fabric body.

The negative electrode current collector may generally have a thickness of 3 µm to 500 µm.

The negative electrode active material layer is stacked on the negative electrode current collector and includes a negative electrode active material prepared from the method for preparing the negative electrode active material described above.

The negative electrode active material may have an average particle diameter (D₅₀) of 10 µm to 30 µm, specifically 14 µm to 25 µm, and more specifically 15 µm to 20 µm. In particular, when the negative electrode active material prepared through the method of the present invention has an average particle diameter in the above range, an effect of improving adhesion through the green coke particles and improving quick charging performance through the calcined coke particles having a smaller average particle diameter smaller than the green coke particles may be further improved.

The negative electrode active material may have a tap density of 1.08 g/cc to 1.17 g/cc, specifically 1.10 g/cc to 1.16 g/cc, and when the tap density range above is satisfied, it is desirable in that a negative electrode active material having a smooth and uniform surface may be obtainable, and high electrode adhesion may be achieved.

The negative electrode active material may be included in an amount of 80 wt% to 99 wt%, preferably 93 wt% to 98 wt% in a negative electrode active material layer.

The negative electrode active material layer may further include a negative electrode binder, a negative electrode conductive material, and/or a thickener in addition to the above-described negative electrode active material.

The negative electrode binder is a component that assists in binding between an active material and/or a current collector, and may generally be included in an amount of 1 wt% to 30 wt%, preferably 1 wt% to 10 wt% in a negative electrode active material layer.

The negative electrode binder may include at least one selected from the group consisting of polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber, and fluorine rubber, preferably, at least one selected from polyvinylidene fluoride and styrene-butadiene rubber.

Any thickener used in typical lithium secondary batteries may be used as the thickener, and an example thereof is carboxymethyl cellulose (CMC).

The negative electrode conductive material is a component for further improving conductivity of a negative electrode active material, and may be included in an amount of 1 wt% to 30 wt%, preferably 1 wt% to 10 wt% in a negative electrode active material layer.

The negative electrode conductive material is not particularly limited as long as it has conductivity without causing chemical changes in batteries, and for example, for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, or the like may be used. Specific examples of a commercially available conductive material may include acetylene black series such as products manufactured by Chevron Chemical or Denka black manufactured by Denka Singapore private limited, products manufactured by Gulf Oil, Ketjen black, EC series manufactured by Armak, Vulcan XC-72 manufactured by Cabot, and Super P manufactured by Timcal.

The above-described negative electrode active material and at least one selected from the negative electrode binder, the negative electrode conductive material, and the thickener may be mixed in a solvent to prepare a negative electrode slurry, and the negative electrode slurry may be applied onto the negative electrode current collector, and roll pressed and dried to prepare the negative electrode active material layer.

The solvent may include water or an organic solvent, such as N-methyl-2-pyrrolidone (NMP), and may be used in an amount such that desirable viscosity is obtained when the negative electrode active material, and optionally the negative electrode binder and the negative electrode conductive material are included. For example, the solvent may be included in an amount such that a concentration of solid content including the negative electrode active material and optionally at least one selected from the negative electrode binder, the thickener, and the negative electrode conductive material is in a range of 50 wt% to 95 wt%, preferably 70 wt% to 90 wt%.

The negative electrode may have an orientation index I(004)/I(110) of 8.5 or less, specifically 4.0 to 8.5. When the area ratio I(004)/I(110) is within the above-described range, active material particles may be arranged to minimize a diffusion path of lithium ions, and quick charging performance may thus be improved. The orientation index may be achieved by using the negative electrode active material prepared from the method for preparing a negative electrode active material described above, for the negative electrode.

The orientation index indicates the degree to which crystal structures inside a negative electrode are arranged in a certain direction, shows which direction crystals are oriented in the electrode, and may be measured through X-ray diffraction (XRD). More specifically, the orientation index is the area ratio ((004)/(110)) obtained by integrating peak intensity of plane (110) and plane (004) after measuring the plane (110) and the plane (004) of a negative electrode active material included in a negative electrode through XRD, and more specifically, XRD measurement conditions are as follows.
Target: Cu (Kα ray) graphite monochromator
Slit: divergence slit = 1 degree, receiving slit=0.1 mm, scattering slit=1 degree
Measurement area and step angle/measurement time:
Plane (110): 76.5 degrees<2θ<78.5 degrees, 0.01 degrees/3 seconds
Plane (004): 53.5 degrees<2θ<56.0 degrees, 0.01 degrees/3 seconds

In the above, 2θ represents a diffraction angle.

The XRD measurement is an example, and other measurement methods may also be used.

### Secondary battery

Furthermore, the present invention provides a secondary battery including the negative electrode described above, more particularly, a lithium secondary battery.

The secondary battery may include the negative electrode described above, a positive electrode facing the negative electrode, a separator disposed between the negative electrode and the positive electrode, and an electrolyte.

The positive electrode may include a positive electrode current collector, and a positive electrode active material layer disposed on the positive electrode current collector.

A positive electrode current collector generally used in the art may be used without limitation as the positive electrode current collector, and, for example, the positive electrode current collector is not particularly limited so long as it has high conductivity without causing chemical changes in secondary batteries. For example, the positive electrode current collector may include at least one selected from copper, stainless steel, aluminum, nickel, titanium, fired carbon, and an aluminum-cadmium alloy, preferably, aluminum.

The positive electrode current collector may have fine irregularities on a surface thereof to improve bonding strength of a positive electrode active material, and the positive electrode current collector may be used in various forms such as a film, a sheet, a foil, a net, a porous body, a foam body, and a non-woven fabric body.

The positive electrode current collector may generally have a thickness of 3 µm to 500 µm.

The positive electrode active material layer may include a positive electrode active material.

The positive electrode active material is a compound capable of reversibly intercalating and deintercalating lithium, and the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a mixture of two or more thereof may be included. Among these materials, in terms of improvement of capacity characteristics and stability of batteries, the lithium composite metal oxide may include LiCoO₂, LiMnO₂, LiNiO₂, lithium nickel manganese cobalt oxide (e.g., Li(Ni_{0.6}Mn_{0.2}Co_{0.2})O₂, Li (Ni_{0.5}Mn_{0.3}Co_{0.2})O₂, or Li(Ni_{0.8}Mn_{0.1}Co_{0.1})O₂), or lithium nickel cobalt aluminum oxide (e.g., Li(Ni_{0.8}Co_{0.15}Al_{0.05})O₂, etc.), and, in consideration of a significant improvement due to the control of type and content ratio of elements constituting the lithium composite metal oxide, the lithium composite metal oxide may include Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and any one thereof or a mixture of two or more thereof may be used.

The positive electrode active material may be included in an amount of 80 wt% to 99 wt% in the positive electrode active material layer.

The positive electrode active material layer may further include at least one selected from a positive electrode binder and a positive electrode conductive material together with the positive electrode active material.

The positive electrode binder is a component that assists in binding between an active material and a conductive material and in the binding with the current collector, and is generally added in an amount of 1 wt% to 30 wt% with respect to a total weight of a positive electrode material mixture. Examples of the positive electrode binder may be at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber.

The positive electrode binder may be included in an amount of 1 wt% to 30 wt% in the positive electrode active material layer.

The conductive material, so long as having conductivity without causing chemical changes in batteries, may be used without particular limitation, and may employ, for example, a conductive material, such as: graphite; carbon-based materials such as carbon black, acetylene black, Ketjen black, channel black, furnace black, lamp black, or thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives. Specific examples of a commercially available conductive material may include acetylene black series such as products manufactured by Chevron Chemical or Denka black manufactured by Denka Singapore private limited, products manufactured by Gulf Oil, Ketjen black, EC series manufactured by Armak, Vulcan XC-72 manufactured by Cabot, and Super P manufactured by Timcal.

The positive electrode conductive material may be added in an amount of 1 wt% to 30 wt% in the positive electrode active material layer.

The separator separates the negative electrode and the positive electrode and provides a movement path of lithium ions, and any separator may be used as the separator without particular limitation as long as it is typically used in secondary batteries, and particularly, a separator having high moisture-retention ability for an electrolyte as well as low resistance to the transfer of electrolyte ions may be used. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used as the organic solvent without particular limitation as long as it may serve as a medium through which ions involved in an electrochemical reaction of a battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, performance of the electrolyte may be excellent when the cyclic carbonate and the chain carbonate are mixed in a volume ratio of about 1:1 to about 1:9.

The lithium salt may be used without particular limitation as long as it is a compound capable of providing lithium ions used in lithium secondary batteries. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be preferably used in a concentration range of 0.1 M to 2.0 M. When the concentration of the lithium salt is in the above range, the electrolyte has suitable conductivity and viscosity, thereby exhibiting excellent performance, and lithium ions may effectively move.

As described above, since the lithium secondary battery according to the present invention stably exhibits excellent discharge capacity, quick charging characteristics, and capacity retention, the lithium secondary battery is suitable for portable devices, such as mobile phones, laptop computers, and digital cameras, and electric cars such as hybrid electric vehicles (HEVs) and particularly, may be preferably used as a constituent battery of a medium and large sized battery module. Thus, the present invention also provides a medium and large sized battery module including the above-described secondary battery as a unit cell.

The medium and large sized battery module may be preferably used in power sources that require high output and large capacity, such as an electric vehicle, a hybrid electric vehicle, and a power storage system.

Hereinafter, examples of the present invention will be described in detail in such a manner that it may easily be performed by a person with ordinary skill in the art to which the present invention pertains. The invention may, however, be embodied in many different forms and should not be construed as being limited to the examples set forth herein.

### Example

### <Preparation of negative electrode active material>

### Example 1: Preparation of negative electrode active material

Green coke particles having a sulfur content of 2,009 ppm, a true density of 1.4 g/cc, and an average particle diameter (D₅₀) of 11 µm, and calcined coke particles having a sulfur content of 115 ppm, a true density of 2.1 g/cc, and an average particle diameter (D₅₀) of 7 µm, and a petroleum-based pitch binder were put into a reactor. The green coke particles and the calcined coke particles were mixed in a weight ratio of 30:70. The pitch binder was mixed in an amount of 7 wt% with respect to a total weight of the green coke particles, the calcined coke particles, and the petroleum-based pitch. The green coke particles, the calcined coke particles, and the petroleum-based pitch binder were heat treated at 3,000 °C for 50 hours to graphitize, thereby preparing artificial graphite particles in the form of secondary particles in which primary artificial graphite particles were bonded to each other. In this case, the primary artificial graphite particles were derived from the green coke particles and the calcined coke particles.

The artificial graphite particles in the form of secondary particles and a petroleum-based pitch were mixed and heat treated at 1,300 °C in a roller hearth kiln to form an amorphous carbon coating layer on the artificial graphite particles in the form of secondary particles.

The prepared negative electrode active material had a tap density of 1.13 g/cc, and an average particle diameter (D₅₀) of 18 µm. The amorphous carbon coating layer was formed in an amount of 3.5 wt% with respect to the weight of the negative electrode active material.

In this case, the tap density was obtained by charging 40 g of the negative electrode active material in a container and measuring a final volume obtained by vibrating up and down 1,000 times to measure apparent density.

### Example 2: Preparation of negative electrode active material

A negative electrode active material was prepared in the same manner as in Example 1, except that the green coke particles and the calcined coke particles were mixed in a weight ratio of 70:30.

The prepared negative electrode active material had a tap density of 1.15 g/cc, and an average particle diameter (D₅₀) of 18 µm.

### Comparative Example 1: Preparation of negative electrode active material

A negative electrode active material was prepared in the same manner as in Example 1, except that the calcined coke particles were not used as coke particles and only the green coke particles were used.

The prepared negative electrode active material had a tap density of 1.05 g/cc, and an average particle diameter (D₅₀) of 18 µm.

### Comparative Example 2: Preparation of negative electrode active material

A negative electrode active material was prepared in the same manner as in Example 1, except that the green coke particles were not used as coke particles and only the calcined coke particles were used.

The prepared negative electrode active material had a tap density of 0.87 g/cc, and an average particle diameter (D₅₀) of 18 µm.

### Comparative Example 3: Preparation of negative electrode active material

A negative electrode active material was prepared in the same manner as in Example 1, except that no binder was used.

The prepared negative electrode active material had a tap density of 1.18 g/cc, and an average particle diameter (D₅₀) of 12 µm.

### Comparative Example 4: Preparation of negative electrode active material

A negative electrode active material was prepared by mixing the negative electrode active material prepared in Comparative Example 1 and the negative electrode active material prepared in Comparative Example 2 in a weight ratio of 30:70.

The prepared negative electrode active material had a tap density of 0.98 g/cc, and an average particle diameter (D₅₀) of 18 µm.

### Comparative Example 5: Preparation of negative electrode active material

A negative electrode active material was prepared by mixing the negative electrode active material prepared in Comparative Example 1 and the negative electrode active material prepared in Comparative Example 2 in a weight ratio of 70:30.

The prepared negative electrode active material had a tap density of 1.04 g/cc, and an average particle diameter (D₅₀) of 18 µm.

### Comparative Example 6: Preparation of negative electrode active material

Green coke particles having a sulfur content of 2,009 ppm, a true density of 1.4 g/cc, and an average particle diameter (D₅₀) of 7 µm were prepared. Calcined coke particles having a sulfur content of 115 ppm, a true density of 2.1 g/cc, and an average particle diameter (D₅₀) of 11 µm were prepared.

A negative electrode active material was prepared in the same manner as in Example 1, except that the green coke particles and the calcined coke particles were used.

The prepared negative electrode active material had a tap density of 1.02 g/cc, and an average particle diameter (D₅₀) of 18 µm.

### Comparative Example 7: Preparation of negative electrode active material

Green coke particles having a sulfur content of 2,009 ppm, a true density of 1.4 g/cc, and an average particle diameter (D₅₀) of 9 µm were prepared. Calcined coke particles having a sulfur content of 115 ppm, a true density of 2.1 g/cc, and an average particle diameter (D₅₀) of 9 µm were prepared.

A negative electrode active material was prepared in the same manner as in Example 1, except that the green coke particles and the calcined coke particles were used.

The prepared negative electrode active material had a tap density of 1.05 g/cc, and an average particle diameter (D₅₀) of 18 µm.

### <Preparation of negative electrode>

The negative electrode active material prepared in Example 1, carbon black as a conductive material, styrene-butadiene rubber as a binder, and carboxymethyl cellulose as a thickener were mixed in a weight ratio of 95.9: 0.5: 2.5: 1.1, and water was added to prepare a negative electrode slurry.

The negative electrode slurry was applied onto a copper negative electrode current collector (thickness: 15 µm), vacuum dried at about 130 °C for 8 hours, and roll pressed to form a negative electrode active material layer (thickness: 55 µm), thereby preparing a negative electrode of Example 1. In this case, the negative electrode was prepared such that a loading of the negative electrode was 3.3 mAh/cm².

Negative electrodes of Examples 2 and Comparative Examples 1 to 7 were prepared in the same manner as in Example 1, except that the negative electrode active materials prepared in Examples 2 and Comparative Examples 1 to 7 were respectively used.

An orientation index of each of the negative electrodes of Examples and Comparative examples was obtained as an area ratio I(004)/I(110) which was obtained by measuring a (004) plane and a (110) plane through XRD and integrating each XRD peak measured. Conditions for XRD measurement are as follows. The results thereof are presented in Table 1 below.
Target: Cu (Kα ray) graphite monochromator
Slit: divergence slit = 1 degree, receiving slit=0.1 mm, scattering slit=1 degree
Measurement area and step angle/measurement time:
Plane (110): 76.5 degrees<28<78.5 degrees, 0.01 degrees/3 seconds
Plane (004): 53.5 degrees<2θ<56.0 degrees, 0.01 degrees/3 seconds

**[Table 1]**

| | Negative electrode orientation index I(004)/I(110) |
|---|---|
| Example 1 | 8 |
| Example 2 | 8 |
| Comparative Example 1 | 9 |
| Comparative Example 2 | 15 |
| Comparative Example 3 | 22 |
| Comparative Example 4 | 13 |
| Comparative Example 5 | 11 |
| Comparative Example 6 | 18 |
| Comparative Example 7 | 15 |

### Experimental Example

### Experimental Example 1: Evaluation of adhesion

The negative electrode of Example 1 was punched to a size of 20 mm × 150 mm, fixed to a center of a 25 mm × 75 mm slide glass using double-sided tape, and then using UTM (manufacturer: LLOYD Instrument LTD., device name: LF Plus), 90° peel strength was measured while peeling a negative electrode active material layer from a negative electrode current collector. The same five negative electrodes of Example 1 were prepared, and 90° peeling strength was measured 5 times in the same manner, and an average value thereof was taken as adhesive of the negative electrode of Example 1 (unit: gf/10mm) .

90° peel strength of Example 2 and Comparative Examples 1 to 7 was measured in the same manner as in Example 1. The results thereof are presented in Table 2 below.

### Experimental Example 2: Evaluation of quick charging performance

### <Preparation of secondary battery>

A lithium metal counter electrode was prepared as a positive electrode.

After a polyolefin separator was disposed between each of the negative electrodes prepared in Examples 1 to 4 and Comparative Examples 1 to 4 and the positive electrode, an electrolyte was injected to prepare secondary batteries of Examples and Comparative Examples. As the electrolyte, an electrolyte prepared by adding vinylene carbonate (VC) in an amount of 0.5 wt% with respect to a solvent to a non-aqueous electrolyte solvent in which ethylene carbonate (EC) and ethyl methyl carbonate (EMC) were mixed in a volume ratio of 2:8, and dissolving LiPF₆ in 1 M was used.

### <Evaluation of quick charging performance>

Using the prepared secondary batteries, the secondary batteries were charged and discharged at 1 C for 3 cycles, and then charged at 3 C for 15 minutes to first differentiate the profile. In this case, inflection points shown in dQ/dV were determined to quantify lithium plating SOC (Li-Plating SOC, %), which is the SOC at the point when Li-plating takes place on a surface of a negative electrode. The results thereof are presented in Table 2 below.

**[Table 2]**

| | Experimental Example 1 | Experimental Example 2 |
|---|---|---|
| | Adhesion (Unit: gf/10mm) | Li-plating SOC(%) |
| Example 1 | 24 | 45 |
| Example 2 | 25 | 43 |
| Comparative Example 1 | 22 | 39 |
| Comparative Example 2 | 12 | 43 |
| Comparative Example 3 | 10 | 25 |
| Comparative Example 4 | 16 | 41 |
| Comparative Example 5 | 20 | 40 |
| Comparative Example 6 | 18 | 39 |
| Comparative Example 7 | 20 | 40 |

Referring to Table 2, it is seen that the negative electrodes and the secondary batteries of Examples 1 and 2 have both improved negative electrode adhesion and quick charging performance compared to the negative electrodes and the secondary batteries of Comparative Examples 1 to 7.

## Claims

1. A method for preparing a negative electrode active material, the method comprising:
mixing green coke particles, calcined coke particles, and a binder; and
graphitizing the mixture through heat treatment to form an artificial graphite particles in the form of a secondary particle in which primary artificial graphite particles are bonded to each other,
wherein an average particle diameter (D₅₀) of the green coke particles is greater than an average particle diameter (D₅₀) of the calcined coke particles,
wherein the green coke particles have an average particle diameter (D₅₀) of 9 µm to 15 µm,
the calcined coke particles have an average particle diameter (D₅₀) of 3 µm to 8 µm, wherein the average particle diameter (D₅₀) is determined by using a laser diffraction method; and
wherein the green coke particles and the calcined coke particles are mixed in a weight ratio of 10:90 to 90:10.

2. The method of claim 1, wherein a ratio of the average particle diameter (D₅₀) of the calcined coke particles to the average particle diameter (D₅₀) of the green coke particles is 0.3 or greater and less than 1, wherein the average particle diameter (D₅₀) is determined by using a laser diffraction method.

3. The method of claim 1, wherein the green coke particles have a true density of 1.20 g/cc to 1.60 g/cc as determined by using a gas pycnometer.

4. The method of claim 1, wherein the calcined coke particles have a true density of 1.80 g/cc to 2.25 g/cc as determined by using a gas pycnometer.

5. The method of claim 1, wherein the green coke particles comprise sulfur (S) in an amount of 1,000 ppm to 5,000 ppm as determined by an inductively coupled plasma (ICP) analysis method.

6. The method of claim 1, wherein the calcined coke particles comprise sulfur (S) in an amount of 50 ppm to 1,000 ppm as determined by an inductively coupled plasma (ICP) analysis method.

7. The method of claim 1, wherein the binder is mixed in an amount of 1 wt% to 10 wt% with respect to a total weight of the green coke particles, the calcined coke particles, and the binder.

8. The method of claim 1, wherein the heat treatment is performed at 2,500 °C to 3,500 °C.

9. The method of claim 1, wherein the heat treatment is performed for 40 hours to 60 hours.

10. A negative electrode comprising:
a negative electrode current collector; and
a negative electrode active material layer disposed on at least one surface of the negative electrode current collector,
wherein the negative electrode active material layer comprises a negative electrode active material prepared according to the method for preparing the negative electrode active material according to claim 1.

11. The negative electrode of claim 10, wherein the negative electrode active material has a tap density of 1.08 g/cc to 1.17 g/cc as determined according to the description.

12. The negative electrode of claim 10, wherein the negative electrode has an orientation index I(004)/I(110) of 8.5 or less as determined according to the description.

13. A secondary battery comprising:
the negative electrode according to claim 10;
a positive electrode facing the negative electrode;
a separator disposed between the negative electrode and the positive electrode; and
an electrolyte.

## Patentansprüche

1. Verfahren zur Herstellung eines Negativelektrodenaktivmaterials, wobei das Verfahren folgendes umfasst:
Mischen von grünen Kokspartikeln, kalzinierten Kokspartikeln und einem Bindemittel; und
Graphitisieren der Mischung durch Wärmebehandlung, um so künstliche Graphitpartikel in Form von Sekundärpartikeln, in denen primäre künstliche Graphitpartikel miteinander verbunden sind, zu bilden,
wobei ein durchschnittlicher Partikeldurchmesser (D₅₀) der grünen Kokspartikel größer ist als ein durchschnittlicher Partikeldurchmesser (D₅₀) der kalzinierten Kokspartikel,
wobei die grünen Kokspartikel einen durchschnittlichen Partikeldurchmesser (D₅₀) von 9 µm bis 15 µm aufweisen,
die kalzinierten Kokspartikel einen durchschnittlichen Partikeldurchmesser (D₅₀) von 3 µm bis 8 µm aufweisen, wobei der durchschnittliche Partikeldurchmesser (D₅₀) unter Verwendung eines Laserbeugungsverfahrens bestimmt wird; und
wobei die grünen Kokspartikel und die kalzinierten Kokspartikel in einem Gewichtsverhältnis von 10:90 bis 90:10 gemischt werden.

2. Verfahren nach Anspruch 1, bei dem das Verhältnis des durchschnittlichen Partikeldurchmessers (D₅₀) der kalzinierten Kokspartikel zum durchschnittlichen Partikeldurchmesser (D₅₀) der grünen Kokspartikel 0,3 oder größer und kleiner als 1 ist, wobei der durchschnittliche Partikeldurchmesser (D₅₀) unter Verwendung eines Laserbeugungsverfahrens bestimmt wird.

3. Verfahren nach Anspruch 1, bei dem die grünen Kokspartikel eine wahre Dichte von 1,20 g/cm³ bis 1,60 g/cm³ aufweisen, bestimmt unter Verwendung eines Gaspyknometers.

4. Verfahren nach Anspruch 1, bei dem die kalzinierten Kokspartikel eine wahre Dichte von 1,80 g/cm³ bis 2,25 g/cm³ aufweisen, bestimmt unter Verwendung eines Gaspyknometers.

5. Verfahren nach Anspruch 1, bei dem die grünen Kokspartikel Schwefel (S) in einer Menge von 1.000 ppm bis 5.000 ppm enthalten, bestimmt durch ein induktiv gekoppeltes Plasma (ICP)-Analyseverfahren.

6. Verfahren nach Anspruch 1, bei dem die kalzinierten Kokspartikel Schwefel (S) in einer Menge von 50 ppm bis 1.000 ppm enthalten, bestimmt durch ein induktiv gekoppeltes Plasma (ICP)-Analyseverfahren.

7. Verfahren nach Anspruch 1, bei dem das Bindemittel in einer Menge von 1 Gew.-% bis 10 Gew.-%, bezogen auf das Gesamtgewicht der grünen Kokspartikel, der kalzinierten Kokspartikel und des Bindemittels, beigemischt wird.

8. Verfahren nach Anspruch 1, bei dem die Wärmebehandlung bei 2.500 °C bis 3.500 °C durchgeführt wird.

9. Verfahren nach Anspruch 1, bei dem die Wärmebehandlung 40 bis 60 Stunden lang durchgeführt wird.

10. Negative Elektrode, umfassend:
einen Negativelektrodenstromkollektor; und
eine Negativelektrodenaktivmaterialschicht, die auf mindestens einer Oberfläche des Negativelektrodenstromkollektors angeordnet ist,
wobei die Negativelektrodenaktivmaterialschicht ein Negativelektrodenaktivmaterial umfasst, das gemäß dem Verfahren zur Herstellung des Negativelektrodenaktivmaterials gemäß Anspruch 1 hergestellt wurde.

11. Negative Elektrode nach Anspruch 10, wobei das Negativelektrodenaktivmaterial eine Klopfdichte von 1,08 g/cm³ bis 1,17 g/cm³ aufweist, bestimmt gemäß der Beschreibung.

12. Negative Elektrode nach Anspruch 10, wobei die negative Elektrode einen Orientierungsindex I(004)/I(110) von 8,5 oder weniger aufweist, bestimmt gemäß der Beschreibung.

13. Sekundärbatterie, umfassend:
die negative Elektrode gemäß Anspruch 10;
eine positive Elektrode, die der negativen Elektrode gegenüberliegt;
einen Separator, der zwischen der negativen Elektrode und der positiven Elektrode angeordnet ist; und
einen Elektrolyten.

## Revendications

1. Procédé de préparation d'une matière active d'électrode négative, le procédé comprenant :
un mélange de particules de coke vert, de particules de coke calciné, et d'un liant ; et
une graphitisation du mélange par traitement thermique pour former des particules de graphite artificiel sous la forme d'une particule secondaire dans laquelle des particules primaires de graphite artificiel sont liées entre elles,
dans lequel un diamètre moyen de particule (D₅₀) des particules de coke vert est supérieur à un diamètre moyen de particule (D₅₀) des particules de coke calciné,
dans lequel les particules de coke vert présentent un diamètre moyen de particule (D₅₀) de 9 µm à 15 µm,
les particules de coke calciné présentent un diamètre moyen de particule (D₅₀) de 3 µm à 8 µm, dans lequel le diamètre moyen de particule (D₅₀) est déterminé en utilisant une méthode de diffraction laser ; et
dans lequel les particules de coke vert et les particules de coke calciné sont mélangées dans un rapport en poids de 10:90 à 90:10.

2. Procédé selon la revendication 1, dans lequel un rapport du diamètre moyen de particule (D₅₀) des particules de coke calciné au diamètre moyen de particule (D₅₀) des particules de coke vert est de 0,3 ou plus et inférieur à 1, dans lequel le diamètre moyen de particule (D₅₀) est déterminé en utilisant une méthode de diffraction laser.

3. Procédé selon la revendication 1, dans lequel les particules de coke vert présentent une densité réelle de 1,20 g/cc à 1,60 g/cc telle que déterminée en utilisant un pycnomètre à gaz.

4. Procédé selon la revendication 1, dans lequel les particules de coke calciné présentent une densité réelle de 1,80 g/cc à 2,25 g/cc telle que déterminée en utilisant un pycnomètre à gaz.

5. Procédé selon la revendication 1, dans lequel les particules de coke vert comprennent du soufre (S) en une quantité de 1 000 ppm à 5 000 ppm telle que déterminée par une méthode d'analyse par plasma à couplage inductif (ICP).

6. Procédé selon la revendication 1, dans lequel les particules de coke calciné comprennent du soufre (S) en une quantité de 50 ppm à 1 000 ppm telle que déterminée par une méthode d'analyse par plasma à couplage inductif (ICP).

7. Procédé selon la revendication 1, dans lequel le liant est mélangé en une quantité de 1 % en poids à 10 % en poids par rapport à un poids total des particules de coke vert, des particules de coke calciné, et du liant.

8. Procédé selon la revendication 1, dans lequel le traitement thermique est mis en œuvre à 2 500 °C à 3 500 °C.

9. Procédé selon la revendication 1, dans lequel le traitement thermique est mis en œuvre pendant 40 heures à 60 heures.

10. Électrode négative comprenant :
un collecteur de courant d'électrode négative ; et
une couche de matière active d'électrode négative disposée sur au moins une surface du collecteur de courant d'électrode négative,
dans laquelle la couche de matière active d'électrode négative comprend une matière active d'électrode négative préparée selon le procédé de préparation de la matière active d'électrode négative selon la revendication 1.

11. Électrode négative selon la revendication 10, dans laquelle la matière active d'électrode négative présente une densité tassée de 1,08 g/cc à 1,17 g/cc telle que déterminée selon la description.

12. Électrode négative selon la revendication 10, dans laquelle l'électrode négative présente un indice d'orientation I(004)/I(110) de 8,5 ou moins tel que déterminé selon la description.

13. Batterie secondaire comprenant :
l'électrode négative selon la revendication 10 ;
une électrode positive en regard de l'électrode négative ;
un séparateur disposé entre l'électrode négative et l'électrode positive ; et
un électrolyte.
